# EUROPEAN PATENT SPECIFICATION

(11) **EP 1 375 203 B1**
(45) Date of publication and mention of the grant of the patent: **14.03.2007**
(21) Application number: 03014107.1
(22) Date of filing: 23.06.2003
(51) Int. Cl.: B60G 11/46, B60G 11/12, B60G 21/05

(54) **A mixed front suspension for a commercial vehicle**
Vorderradaufhängung mit Federn verschiedener Art für ein Nutzfahrzeug
Suspension avant mixte pour véhicule utilitaire

(30) Priority: 26.06.2002 IT TO20020557
(43) Date of publication of application: 02.01.2004
(73) Proprietor: IVECO S.p.A., 10156 Torino (IT)
(72) Inventor: Ponsetti, Ferdinando, 10014 Caluso (IT); Barchi, Ferruccio, 10154 Torino (IT)
(74) Representative: Gervasi, Gemma

(56) References cited:
- EP-A- 0 583 597
- DE-C- 4 112 212
- GB-A- 2 219 773
- IT-B- 1 237 611
- US-A- 1 350 110
- US-A- 1 528 481
- US-A- 1 534 424
- US-A- 1 796 235
- US-A- 3 730 550
- US-A- 5 046 752

## Description

The present invention relates to a rigid-axle type mixed front suspension for a commercial vehicle.

Suspensions of the type indicated are known, which essentially comprise, for each side of the vehicle, a leaf spring having an intermediate portion attached to the axle of the vehicle and at least one air spring interposed between said leaf spring and a vehicle chassis; the leaf spring has a front end pivotally connected to a support connected to the chassis and a rear end attached to the chassis via a link. An example of this solution is illustrated in DE-A-3825105.

A problem connected with this type of suspension is linked to the fact that the suspension setting cannot be controlled by means of the air spring over wide ranges, which may be necessary, for example, when loading/unloading movable crates of different height. In fact, if the air spring is extended so as to cause the chassis to be raised, it results in undesirable bending stress in the leaf spring and resultant dissipation of the energy supplied to the air spring as deforming energy of the leaf spring.

Mixed suspensions are also known in which, with a view to resolving the above-mentioned problem, the rear connection of the leaf spring comprises a pair of links which are mutually "in series", i.e. having respective first ends articulated to one another and respective second ends articulated to the chassis and to the leaf spring, respectively. An example of this solution is illustrated in IT-B-1237611, or US-1,350,110.

However, this solution has the problem that the leaf spring is movably connected and, therefore, fulfils a substantially guiding and connecting function but does not contribute substantially to the elastic characteristic of the suspension.

EP-A-583597, which is considered the closest prior art, discloses a leaf spring suspension for a vehicle, having a rear end with an articulated connection with a link pivotably mounted on the chassis, a rocker pivotably mounted on the link with an arm comprising a support member operating with the link between a maximum compression and a raised position of the suspension.

The object of the present invention is to devise a mixed suspension which does not have the drawbacks associated with the above-described known suspensions.

This object is achieved by the present invention in that it relates to a mixed front suspension for a commercial vehicle comprising, for each side of the vehicle, a leaf spring having an intermediate portion attached to an axle of the vehicle and at least one air spring interposed between said leaf spring and a chassis of the vehicle, said leaf spring having a front end connected to said chassis by means of first articulated connecting means, and a rear end attached to the chassis by means of second articulated connecting means comprising a link pivotably mounted on the chassis, wherein second articulated connecting means comprise a rocker member pivotably mounted on said link, and a having a first arm pivotably mounted on said rear end of said leaf spring; said first arm comprising a support member co-operating with said link within a range of travel of the suspension between a maximum compression position and a preset raised position,
characterised in that said rocker member comprises a second arm opposite the first arm and provided with a stop member co-operating with the link respectively in a maximum raised position of the suspension.

With a view to a better understanding of the present invention a preferred embodiment thereof will be described non-restrictively by way of example below and with reference to the accompanying drawings, in which:
Figure 1 is a view in side elevation of a suspension in accordance with the present invention;
Figure 2 is a plan view of the suspension in Figure 1;
Figure 3 is a view in perspective of a detail of the suspension in Figure 1;
Figures 4 and 5 are views in side elevation of the detail in Figure 3, in two different operating positions.

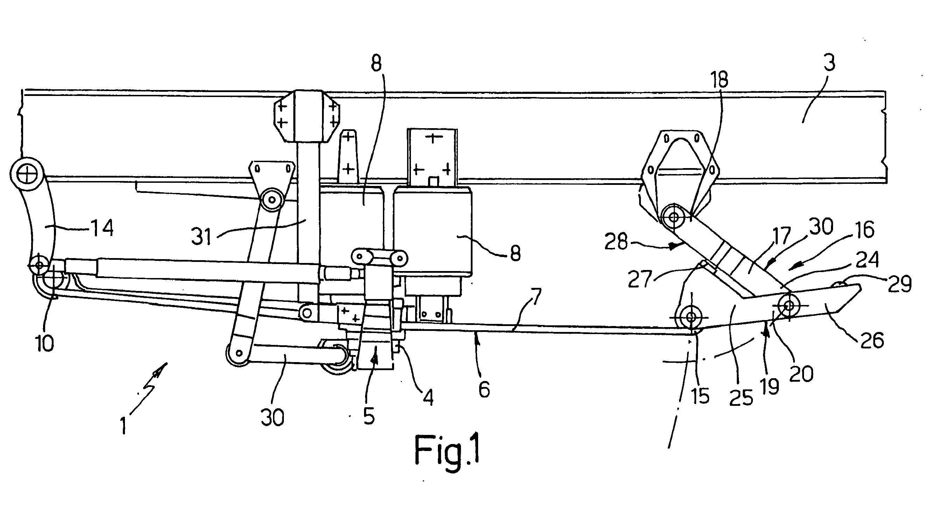

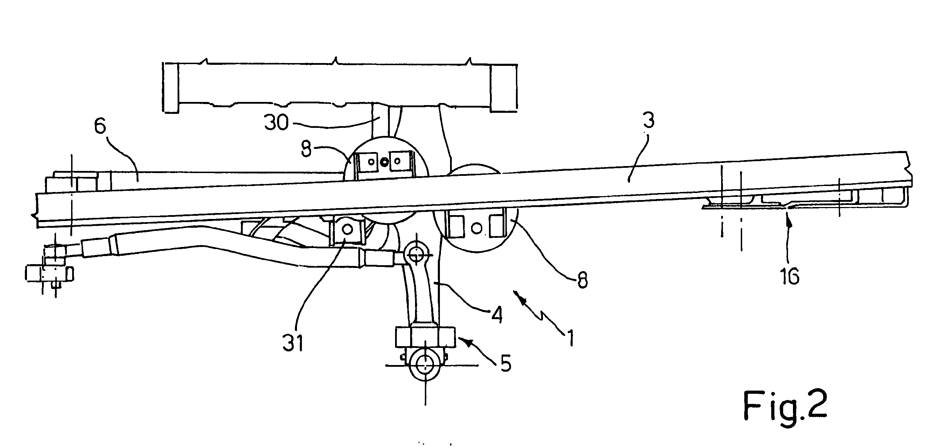

Referring now to Figures 1 and 2, the reference numeral 1 generally denotes a mixed front suspension for a commercial vehicle provided with a chassis 3 and with a rigid front axle 4, at the ends of which are respectively attached wheel mounting assemblies 5, which are of known type and which will not be described in more detail.

The suspension 1 comprises, for each side of the vehicle, a leaf spring 6 disposed longitudinally below the chassis 3 and having an intermediate portion 7 attached to the axle 4. The suspension 1 also comprises a pair of air springs 8 interposed between the chassis 3 and the intermediate portion 7 of the leaf spring 6.

The leaf spring 6 has a front end 10 attached to the chassis 3 via a first link 14 and a rear end 15 attached to the chassis 3 via an articulated assembly 16.

The articulated assembly 16 essentially comprises a second link 17 having an upper end 18 pivotally mounted on the chassis 3, and a rocker member 19 having an intermediate portion 20 pivotably mounted on a lower end 24 of the second link 17.

The rocker member 19 comprises a first front arm 25 pivotably mounted on the rear end 15 of the leaf spring 6 and a second rear arm 26.

The first arm 25 has a buffer 27 co-operating with a front side 28 of the second link 17 so as to define a "normal" or rest position of the articulated assembly 16 which is maintained within a range of travel of the suspension between a maximum compression position and an intermediate preset position of the raising travel, i.e. substantially in any dynamic condition of the vehicle.

The second arm 26 is provided with a second upper buffer 29 adapted to co-operate with a rear side 30 of the second link 17 in a maximum raised position of the suspension (Figure 5).

The suspension 1 is also provided with a transverse stabiliser bar 30, of conventional type, and with a shock absorber 31 for each side of the vehicle, interposed between the chassis 3 and the axle 4.

The mode of operation of the suspension 1 is as follows.

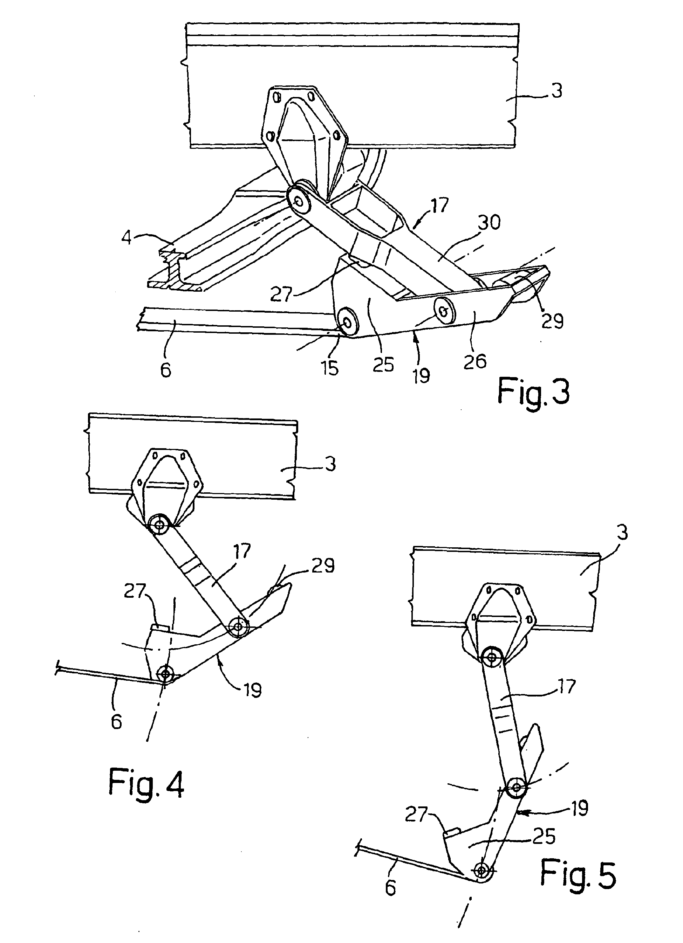

Under normal conditions, the articulated assembly 16 is in the position shown in Figures 1 and 3, in which the second link 17 is inclined rearwards and the rocker member 19 is in abutment therewith via the buffer 27 and attached thereto in a substantially rigid manner. The articulated assembly 16 acts like a conventional link having an upper end pivotably mounted on the chassis 3 and a lower end connected to the leaf spring 6.

This position, as indicated above, is maintained substantially in any dynamic position of the vehicle, insofar as the vertical loads acting on the suspension 1 prevent separation of the link 17 from the buffer 27. Therefore, under dynamic conditions, the elastic reaction of the leaf spring 6 is utilised, which is able to operate correctly.

As a result of this, both cornering and braking behaviour are optimum.

Under static conditions of the vehicle, the described normal position of the articulated assembly is maintained at a preset value of the range of travel of the air springs 8; once this value has been exceeded, the chassis 3 can be raised by the air springs 8 without inducing undesirable deflections in the leaf spring 6 insofar as the link 17 can move away from the buffer 27 (Figure 4); therefore, the articulated assembly 16 can behave like a rear movable connection for the leaf spring 6.

In this way all the energy supplied to the air spring 8 is expended to raise the load.

For example, this makes it possible to bring the vehicle chassis 3 "under" a movable crate in the "package" setting of the articulated assembly 16 and, therefore, to raise the chassis 3 and the movable crate disposed thereon so as to enable it to be handled.

The second buffer 29 has a safety stop function and, when certain dynamic conditions prevail (for example under braking while reversing in the raised setting), prevents the articulated assembly 16 from being able to reach and exceed a dead centre position, in which the link 17 is vertical and the latter could rotate forwards during a subsequent compression travel with damaging consequences for the suspension.

The substantial raising travel which can be obtained makes it possible to use the same vehicle for handling movable crates with feet of different heights (e.g. 1120, 1220, 1320 mm), without any modification to the chassis and without using different counter-chassis or external devices for raising the crate.

Moreover, the solution is economical and easily interchangeable, without any modification or complication of the chassis, using conventional mechanical solutions.

Finally, it is evident that the suspension 1 described can be subject to modifications and variants which do not depart from the scope of protection of the claims.

In particular, the second links 17 on the two sides of the vehicle can be joined together by a cross-member.

## Claims

1. A mixed front suspension for a commercial vehicle comprising, for each side of the vehicle, a leaf spring (6) having an intermediate portion (7) attached to an axle (4) of the vehicle and at least one air spring (8) interposed between said leaf spring (6) and a chassis (3) of the vehicle, said leaf spring (6) having a front end (10) connected to said chassis by means of first articulated connecting means (14), and a rear end (15) attached to the chassis (3) by means of second articulated connecting means (16) comprising a link (17) pivotably mounted on the chassis (3), said second articulated connecting means (15) comprising a rocker member (19) pivotably mounted on said link (17), and a having a first arm (25) pivotably mounted on said rear end (15) of said leaf spring (6); said first arm (25) comprising a support member (27) co-operating with said link (17) within a range of travel of the suspension (1) between a maximum compression position and a preset raised position,
**characterised in that** said rocker member (19) comprises a second arm (26) opposite said first arm (25) and provided with a second stop member (29) co-operating with said link (17) in a maximum raised position of the suspension (1).

## Patentansprüche

1. Mischvorderradaufhängung für ein Nutzfahrzeug, welche umfasst, für jede Seite des Fahrzeugs, eine Blattfeder (6) mit einem Zwischenabschnitt (7), befestigt an einer Achse (4) des Fahrzeugs, und zumindest eine Luftfeder (8), angeordnet zwischen der Blattfeder (6) und einem Fahrgestell (3) des Fahrzeugs, wobei die Blattfeder (6) ein vorderes Ende (10) aufweist, welches mit dem Fahrgestell mittels eines ersten Gelenkverbindungsmittels (14) verbunden ist, und ein hinteres Ende (15), welches an dem Fahrgestell (3) mittels eines zweiten Gelenkverbindungsmittels (16) befestigt ist, welches eine Gelenkverbindung (17) umfasst, welche gelenkig an dem Fahrgestell (3) montiert ist, und wobei das zweite Gelenkverbindungsmittel (15) weiter einen Kipphebel (19) umfasst, welcher gelenkig an der Gelenkverbindung (17) montiert ist, und einen ersten Arm (25) aufweist, welcher gelenkig an dem hinteren Ende (15) der Blattfeder (6) montiert ist; wobei der erste Arm (25) ein Stützelement (27) umfasst, welches mit der Gelenkverbindung (17) innerhalb eines Bewegungsbereiches der Radaufhängung (1) zwischen einer maximalen Kompressionsposition und einer voreingestellten erhöhten Position zusammenwirkt, **dadurch gekennzeichnet, dass** der Kipphebel (19) einen zweiten Arm (26) umfasst, entgegengesetzt angeordnet zu dem ersten Arm (25), und versehen mit einem zweiten Anschlagelement (29), welches mit der Gelenkverbindung (17) in einer maximal erhöhten Position der Radaufhängung (1) zusammenwirkt.

## Revendications

1. Suspension avant mixte pour véhicule utilitaire comprenant, pour chaque côté du véhicule, un ressort à lame (6) présentant une partie intermédiaire (7) fixée à un axe (4) du véhicule et au moins un ressort pneumatique (8) interposé entre ledit ressort à lame (6) et un châssis (3) du véhicule, ledit ressort à lame (6) ayant une extrémité avant (10) reliée audit châssis par l'intermédiaire d'un premier moyen de connexion articulé (14), et une extrémité arrière (15) fixée au châssis (3) par l'intermédiaire d'un second moyen de connexion articulé (16) comprenant une biellette (17) montée de façon pivotante sur le châssis (3), ledit second moyen de connexion articulé (16) comprenant un élément de basculeur (19) monté de façon pivotante sur ladite biellette (17), et ayant un premier bras (25) monté de façon pivotante sur ladite extrémité arrière (15) dudit ressort à lame (6) ; ledit premier bras (25) comprenant un élément de support (27) coopérant avec ladite biellette (17) à l'intérieur d'un domaine de débattement de la suspension (1) entre un état de compression maximale et un état de détente préréglée,
**caractérisée en ce que** ledit élément de basculeur (19) comprend un second bras (26) opposé audit premier bras (25) et muni d'un second élément d'arrêt (29) coopérant avec ladite biellette (17) dans un état de détente maximale de la suspension (1).
